# FASCICULE DE BREVET EUROPEEN

(11) **EP 2 658 070 B1**
(45) Date de publication et mention de la délivrance du brevet: **21.10.2015**
(21) Numéro de dépôt: 13164967.5
(22) Date de dépôt: 23.04.2013
(51) Int. Cl.: H02J 3/32

(54) **Système de stockage d'énergie électrique comprenant un onduleur**
Stromspeichersystem, das einen Wechselrichter umfasst
System for storing electric energy comprising an inverter

(30) Priorité: 27.04.2012 FR 1253910
(43) Date de publication de la demande: 30.10.2013
(73) Titulaire: SAFT, 93170 Bagnolet (FR)
(72) Inventeur: Jaoui, Younès, 33520 Bruges (BE); Morin, Christophe, 33160 Saint Aubin de Medoc (FR)
(74) Mandataire: Hirsch & Associés

(56) Documents cités:
- US-A1- 2002 041 126
- US-A1- 2011 133 556

## Description

La présente invention concerne le domaine des systèmes de stockage d'énergie électrique comprenant un onduleur. Ces systèmes de stockage d'énergie comprennent des unités de stockage d'énergie électrique et sont souvent couplés à un réseau alternatif pour stocker de l'énergie électrique lorsque le réseau alternatif en a trop ou n'en a pas besoin et pour restituer cette énergie électrique au réseau alternatif lorsqu'il en a besoin. Cette énergie électrique excédentaire, qui est temporairement stockée dans le système de stockage d'énergie électrique pour être ensuite fournie au réseau alternatif, peut provenir soit du réseau alternatif soit de sources d'énergie, de préférence renouvelables, comme par exemple des panneaux solaires ou des éoliennes.

Dans un système de stockage d'énergie électrique d'une certaine taille, devant être raccordé à un réseau alternatif, plusieurs unités de stockage d'énergie électrique sont utilisées. Ces unités de stockage d'énergie électrique peuvent être utilisées individuellement, en groupe ou en totalité, à un moment donné, selon les besoins du réseau alternatif. Au moins un onduleur, qui est un convertisseur continu / alternatif, est disposé entre les unités de stockage d'énergie électrique d'une part et le réseau alternatif d'autre part.

Se pose ensuite le problème du nombre d'onduleurs à utiliser et de la façon de relier le ou les onduleurs aux unités de stockage d'énergie électrique. Ceci, d'autant plus que les tensions d'unités de stockage d'énergie électrique ne sont pas forcément équilibrées entre elles, pour plusieurs raisons. D'abord parce que les unités de stockage d'énergie électrique d'un même système de stockage d'énergie électrique peuvent être de technologies différentes ou peuvent présenter des comportements différents, comme par exemple un comportement de batterie de puissance et un comportement de batterie d'énergie. Par ailleurs, le niveau de tension de certaines unités de stockage d'énergie électrique peut être incompatible avec le niveau de tension du réseau alternatif et peut nécessiter des composants supplémentaires d'adaptation. Comme, par exemple, la nécessité de rajouter un transformateur élévateur pour assurer le fonctionnement d'une batterie à tension de sortie basse avec un réseau alternatif à tension réseau élevée, par exemple 600VDC et 480VAC.

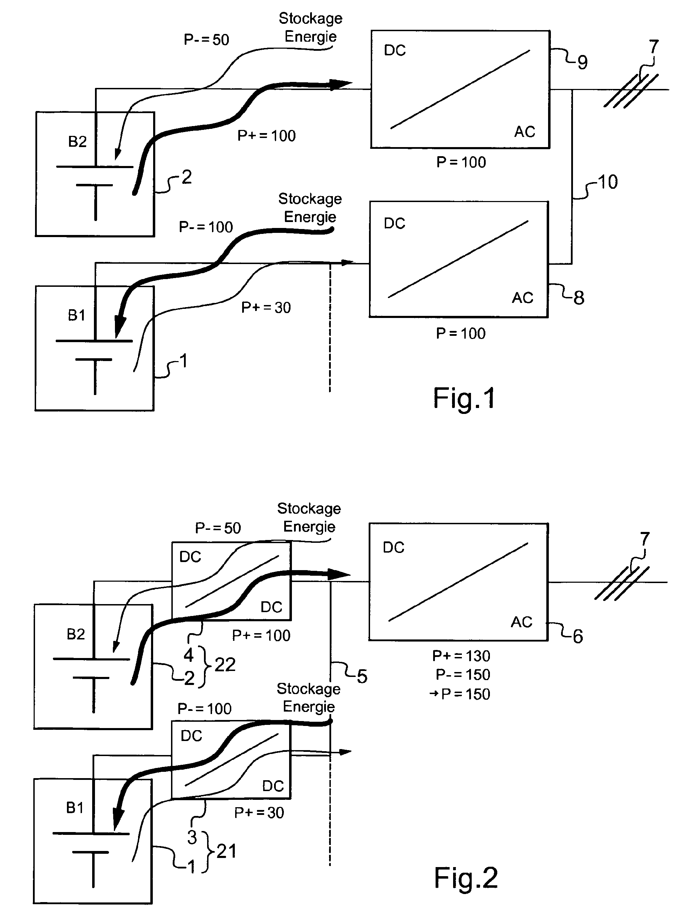

Selon un premier art antérieur, par exemple décrit sur la figure 1, qui sera détaillé ultérieurement, il est connu de connecter en parallèle sur un réseau de tension alternatif plusieurs associations comprenant chacune une batterie directement raccordée en série avec un onduleur, chaque onduleur étant dimensionné pour la batterie associée. Un inconvénient de ce premier art antérieur est la complexité et le coût global du système de stockage d'énergie électrique, car il comprend plusieurs onduleurs, l'onduleur étant un composant relativement complexe et coûteux.

Selon un deuxième art antérieur, par exemple décrit dans la demande de brevet chinoise CN 102122826, il est connu de raccorder, en parallèle à l'entrée d'un onduleur commun, plusieurs associations comprenant chacune une batterie en série avec un hacheur, qui est un convertisseur continu / continu. Si l'utilisation d'un onduleur commun, surdimensionné par rapport à chacun des hacheurs qui sont branchés en parallèle à son entrée, permet un gain de coût et de complexité, en revanche l'ajout de plusieurs hacheurs engendre une perte au niveau du coût et une complexité accrue. Le bilan de coût et de complexité, même s'il se révèle positif, ne se révèle que modérément positif. Par ailleurs, l'utilisation de hacheurs complexes comprenant de nombreux interrupteurs de puissance, réduit l'efficacité du bilan.

Selon un troisième art antérieur, par exemple décrit dans la demande de brevet US 2011/0133556, il est connu de raccorder, en parallèle à l'entrée d'un onduleur commun, plusieurs associations comprenant chacune une batterie en série avec un hacheur, qui est un convertisseur continu / continu. Si l'utilisation d'un onduleur commun, surdimensionné par rapport à chacun des hacheurs qui sont branchés en parallèle à son entrée, permet un gain de coût et de complexité, en revanche l'ajout de plusieurs hacheurs engendre une perte au niveau du coût et une complexité accrue. Le bilan de coût et de complexité, même s'il se révèle positif, ne se révèle que modérément positif. Par ailleurs, cette installation concerne un système de stockage d'énergie d'appoint à l'alimentation par le réseau alternatif d'une installation de taille modeste, comme par exemple la maison d'un particulier. Elle ne pourrait être utilisée pour l'alimentation du réseau alternatif lui-même.

Le but de la présente invention est de fournir un système de stockage d'énergie électrique palliant au moins partiellement les inconvénients précités.

Plus particulièrement, l'invention vise à fournir un système de stockage d'énergie électrique qui, en plus de diminuer le coût et la complexité du système par l'utilisation d'un onduleur commun à l'entrée duquel sont branchées en parallèle plusieurs unités de stockage d'énergie électrique par l'intermédiaire de hacheurs respectifs, diminue encore le coût et la complexité du système en diminuant le coût et la complexité d'au moins un ou plusieurs de ces hacheurs.

Les hacheurs ont l'avantage de permettre le branchement à l'entrée de l'onduleur d'unités de stockage d'énergie électrique de type différent. Les unités de stockage d'énergie de type différent, sont soit des unités de stockage d'énergie électrique de technologie différente, par exemple batteries et super-condensateurs, ou de comportement différent, par exemple batteries de puissance et batteries d'énergie.

Différentes technologies de batteries peuvent aussi être combinées comme par exemple des batteries alcalines avec des batteries Lithium-Ion, et ou avec des piles à combustible (SOFC). Les batteries peuvent être combinées avec des super-condensateurs appelés aussi des super-capacités (« ultracapacitors » en anglais), des condensateurs à double couche électrique (« electric double layer capacitor » en anglais).

Les hacheurs ont aussi l'avantage de stabiliser la tension au niveau de leurs sorties respectives. Cette tension de sortie stabilisée des hacheurs permet d'utiliser un onduleur commun moins surdimensionné que si les unités de stockage d'énergie électrique étaient directement raccordées en parallèle à l'entrée de l'onduleur commun.

Pour permettre la charge et la décharge des unités de stockage d'énergie électrique, les hacheurs sont bidirectionnels. Si une ou plusieurs unités de stockage d'énergie électrique ne fonctionnaient que dans un sens, par exemple la charge ou la décharge, le ou les hacheurs associés seraient monodirectionnels.

En effet, dans les deuxième et troisième arts antérieurs, tous les hacheurs utilisés sont des hacheurs symétriques. Un hacheur symétrique est un hacheur dimensionné symétriquement pour la charge et pour la décharge de l'unité de stockage d'énergie électrique à laquelle il est associé.

Selon l'invention, au contraire, au moins un ou plusieurs de ces hacheurs, voire éventuellement tous ces hacheurs, est ou sont asymétriquement dimensionné(s). Un hacheur asymétriquement dimensionné est un hacheur dimensionné asymétriquement pour la charge et pour la décharge de l'unité de stockage d'énergie électrique à laquelle il est associé. Dans un hacheur asymétrique, dans l'un des sens, charge ou décharge, tout ou partie des composants électriques sont sous-dimensionnés par rapport aux composants électriques de l'autre sens, décharge ou charge. Pour au moins certains des composants électriques du hacheur, le ou les composants électriques utilisés dans un sens présentent un courant maximal admissible (en fonctionnement normal ou nominal) qui est plus faible que ce même courant maximal admissible pour le ou les composants électriques utilisés dans l'autre sens.

L'utilisation d'un onduleur commun permet la mise en parallèle des unités de stockage d'énergie électrique en entrée de l'onduleur commun, avec une réduction des cartes de commande d'onduleur complexes et des interrupteurs de puissance, pour l'étage onduleur du système de stockage d'énergie électrique.

Pour répondre au besoin de relier en parallèle plusieurs unités de stockage d'énergie électrique au réseau alternatif dans un système de stockage d'énergie électrique, selon l'invention, il est proposé l'utilisation d'un onduleur commun et de plusieurs hacheurs bidirectionnels intermédiaires, de manière à pouvoir optimiser leur dimensionnement dans le sens de la charge de l'unité de stockage d'énergie électrique et dans le sens de la décharge de l'unité de stockage d'énergie électrique. Il en résulte l'optimisation du coût et de la taille des semi-conducteurs utilisés, amenant une optimisation globale de coût et de complexité au niveau du système de stockage d'énergie électrique.

Par ailleurs cette architecture de système de stockage d'énergie électrique, tout en autorisant l'optimisation individuelle pour chaque type d'unité de stockage d'énergie électrique, permet aussi l'utilisation d'unités de stockage d'énergie électrique de technologies différentes avec des courants adaptés à chaque technologie.

A cette fin, la présente invention propose un système de stockage d'énergie électrique, comprenant : un onduleur, plusieurs associations, d'une unité de stockage d'énergie électrique en série avec un hacheur bidirectionnel, reliées en parallèle à une même entrée de l'onduleur, du côté de leur hacheur, **caractérisé en ce qu'**au moins un hacheur bidirectionnel, associé à une unité de stockage d'énergie électrique apte à être chargée et déchargée asymétriquement, est dimensionné asymétriquement pour la charge et la décharge de ladite unité de stockage associée.

La présente invention propose également un circuit de système de stockage d'énergie électrique, comprenant, successivement reliés en série, une unité de stockage d'énergie électrique apte à être chargée et déchargée asymétriquement, un hacheur bidirectionnel et un onduleur surdimensionné par rapport au hacheur bidirectionnel, **caractérisé en ce que** le hacheur bidirectionnel est dimensionné asymétriquement pour la charge et la décharge de ladite unité de stockage.

De préférence, il y a un bus continu à l'entrée de l'onduleur et toutes les sorties de hacheurs sont reliées à ce bus continu. Ce bus continu, où sont raccordées toutes les sorties des unités de stockage d'énergie électrique, permet de manière simple et aisée, un éventuel échange d'énergie entre deux unités de stockage d'énergie électrique.

Suivant des modes de réalisation préférés, l'invention comprend une ou plusieurs des caractéristiques suivantes.

De préférence, au moins plusieurs des hacheurs bidirectionnels, de préférence tous les hacheurs bidirectionnels, respectivement associés à des unités de stockage aptes à être chargées et déchargées asymétriquement, sont dimensionnés asymétriquement pour la charge et la décharge des dites unités de stockage associées.

De préférence, un ou plusieurs de ces hacheurs bidirectionnels dimensionnés asymétriquement sont dimensionnés asymétriquement de manière à ce que leur ou leurs interrupteurs de puissance utilisés dans le sens de la décharge présentent un courant maximal admissible supérieur à celui de leur ou de leurs interrupteurs de puissance utilisés dans le sens de la charge.

De préférence, un ou plusieurs de ces hacheurs bidirectionnels dimensionnés asymétriquement sont dimensionnés asymétriquement de manière à ce que leur ou leurs interrupteurs de puissance utilisés dans le sens de la charge présentent un courant maximal admissible supérieur à celui de leur ou de leurs interrupteurs de puissance utilisés dans le sens de la décharge.

De préférence, un ou plusieurs de ces hacheurs bidirectionnels dimensionnés asymétriquement sont dimensionnés asymétriquement de manière à ce que leur ou leurs interrupteurs de puissance utilisés dans le sens de la décharge présentent un courant maximal admissible supérieur à celui de leur ou de leurs interrupteurs de puissance utilisés dans le sens de la charge, un ou plusieurs de ces hacheurs bidirectionnels dimensionnés asymétriquement sont dimensionnés asymétriquement de manière à ce que leur ou leurs interrupteurs de puissance utilisés dans le sens de la charge présentent un courant maximal admissible supérieur à celui de leur ou de leurs interrupteurs de puissance utilisés dans le sens de la décharge, les interrupteurs de puissance de l'onduleur sont dimensionnés pour que leur courant maximal admissible soit inférieur, de préférence inférieur d'au moins 10%, encore plus de préférence inférieur d'au moins 20%, à la somme des majorants de courant maximal admissible d'interrupteur de puissance respectivement de tous les hacheurs reliés à ladite même entrée de l'onduleur, le cas échéant majorée du ou des courants maximaux admissibles d'une éventuelle ou d'éventuelles unités de stockage non associées à des hacheurs mais reliées à ladite même entrée de l'onduleur.

De préférence, ledit courant maximal admissible supérieur du ou des interrupteurs de puissance du ou des hacheurs bidirectionnels dimensionnés asymétriquement est supérieur d'au moins un facteur un et demi, de préférence d'au moins un facteur cinq, encore plus de préférence d'au moins un facteur vingt.

De préférence, ledit ou lesdits hacheurs bidirectionnels dimensionnés asymétriquement comprennent chacun au plus quatre interrupteurs de puissance, de préférence chacun au plus deux interrupteurs de puissance.

De préférence, ledit ou lesdits interrupteurs de puissance peuvent être choisis parmi une ou plusieurs familles de transistors parmi lesquelles des transistors de puissance de type IGBT (Insulated Gate Bipolar Transistor) ou de type GTO (Gate Turn Off thyristor) ou de type Thyristor ou MOSFET ou JFET ou BIPOLAIRES.

De préférence, la puissance de l'onduleur est comprise entre 50kW et 5MW, de préférence comprise entre 500kW et 2MW.

De préférence, parmi les unités de stockage d'énergie électriques, se trouvent une ou plusieurs batteries et/ou un ou plusieurs super-condensateurs.

De préférence, le nombre des dites associations est compris entre 2 et 15, de préférence entre 5 et 10.

De préférence, le hacheur bidirectionnel ou la majorité, ou de préférence la totalité, des hacheurs bidirectionnels, appartenant à une ou à plusieurs des dites associations et étant dimensionné(s) asymétriquement, est un hacheur survolteur ou sont des hacheurs survolteurs.

De préférence, la tension d'entrée de l'onduleur est comprise entre 300 et 2000 volts, de préférence entre 400 et 1500 volts, encore plus de préférence entre 600 et 1200 volts.

De préférence, le système de stockage d'énergie électrique comprend un contrôleur de l'onduleur qui pilote l'onduleur et un contrôleur des unités de stockage qui pilote les unités de stockage, les deux contrôleurs étant reliés entre eux de manière à synchroniser entre eux les deux pilotages ou en ce qu'il comprend un contrôleur de l'onduleur qui pilote l'onduleur et plusieurs contrôleurs respectivement des unités de stockage qui pilote les unités de stockage, le contrôleur de l'onduleur étant relié aux contrôleurs respectifs des unités de stockage de manière à synchroniser son pilotage avec leurs pilotages respectifs.

Selon l'invention, il est aussi prévu une installation électrique comprenant un réseau électrique alternatif et un système de stockage d'énergie électrique selon l'une quelconque des revendications précédentes qui est relié audit réseau électrique alternatif de manière à pouvoir alimenter ledit réseau électrique alternatif.

De préférence, l'installation électrique est une installation électrique de production ou de distribution d'énergie électrique.

De préférence, un ou plusieurs panneaux solaires et ou une ou plusieurs piles à combustible et ou une ou plusieurs éoliennes sont reliés après adaptation de tension, en parallèle des unités de stockage d'énergie, à ladite entrée de l'onduleur, de préférence respectivement par l'intermédiaire d'un ou de plusieurs hacheurs monodirectionnels.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente un exemple schématique d'un système de stockage d'énergie comprenant plusieurs onduleurs, selon un art antérieur.
La figure 2 représente un exemple schématique de la partie centrale d'un système de stockage d'énergie comprenant un onduleur, selon l'invention.
La figure 3 représente un exemple schématique de la partie centrale d'un système de stockage d'énergie comprenant un onduleur, montrant quelques fonctions périphériques du système de stockage, selon l'invention.
La figure 4 représente un premier exemple de circuit électrique réalisant la partie centrale d'un système de stockage d'énergie comprenant un onduleur, selon l'invention.
La figure 5 représente un deuxième exemple de circuit électrique réalisant la partie centrale d'un système de stockage d'énergie comprenant un onduleur, selon l'invention.
La figure 6 représente un troisième exemple de circuit électrique réalisant la partie centrale d'un système de stockage d'énergie comprenant un onduleur, selon l'invention.
La figure 7 représente un quatrième exemple de circuit électrique réalisant la partie centrale d'un système de stockage d'énergie comprenant un onduleur, selon l'invention.
La figure 8 représente un cinquième exemple de circuit électrique réalisant la partie centrale d'un système de stockage d'énergie comprenant un onduleur, selon l'invention.

Les unités de stockage d'énergie électriques sont souvent des batteries. Une unité de stockage d'énergie électrique peut être une batterie, une partie d'une batterie, ou un groupe de batteries. Dans la suite du texte, le terme de batterie sera employé indifféremment avec l'expression unité de stockage d'énergie électrique. Les batteries utilisées peuvent être de même technologie ou de technologies différentes. Une batterie peut être remplacée par un autre type d'unité de stockage d'énergie électrique, par exemple par un super-condensateur.

Un hacheur bidirectionnel peut être symétrique ou asymétrique, tandis qu'un onduleur est symétrique. Un hacheur bidirectionnel asymétrique est un hacheur dimensionné asymétriquement. Les interrupteurs de puissance d'un hacheur bidirectionnel asymétrique peuvent donc être de taille différente, certain(s) utilisés pour un sens d'utilisation étant de taille réduite, charge ou décharge, de la batterie, par rapport à d'autre(s) utilisés dans l'autre sens qui sont de taille plus grande. Les interrupteurs de puissance d'un onduleur sont de même taille dans les deux sens ; ils sont d'ailleurs de préférence tous de la même taille entre eux.

La figure 1 représente un exemple schématique d'un système de stockage d'énergie comprenant plusieurs onduleurs, selon un art antérieur. Le système de stockage d'énergie comprend une batterie 1 en série avec un onduleur 8, une batterie 2 en série avec un onduleur 9, les onduleurs 8 et 9 étant raccordés à un bus alternatif 10 lui-même raccordé au réseau alternatif 7.

Dans l'hypothèse où les batteries 1 et 2 ont des besoins différents, l'une ayant plus de besoin de puissance en charge P- et l'autre en décharge P+, le besoin de puissance en charge pour la batterie 1 est par exemple de 100 et le besoin de puissance en décharge pour cette même batterie 1 est par exemple de 30, le besoin de puissance en charge pour la batterie 2 est par exemple de 50 et le besoin de puissance en décharge pour cette même batterie 2 est par exemple de 100, chacun des onduleurs 8 et 9, qui sont symétriques, aura un besoin de puissance de 100 et sera donc dimensionné de manière correspondante.

Le nombre total d'interrupteurs de puissance sera au minimum de 12 interrupteurs de puissance, 6 interrupteurs de puissance par onduleur.

Si l'on veut évaluer plus finement la complexité et le coût global de la partie du système de stockage d'énergie électrique situé en aval des batteries, il faut identifier le nombre et la taille des interrupteurs de puissance, leur taille étant proportionnelle au courant pour une même tension maximale considérée. Dans le cas des deux onduleurs sans hacheur, la tension d'entrée de l'onduleur peut varier par exemple dans un facteur 1,5. Un coefficient de surdimensionnement de 1,5 sur le courant est alors à appliquer. Il faut donc 12 interrupteurs de puissance avec un besoin en puissance de 150 par interrupteurs de puissance, ce qui donne un total de 1800, chiffre représentatif de la participation de cette partie du système de stockage d'énergie électrique au coût et à la complexité globale.

Par ailleurs, il faut deux systèmes de contrôle, un par onduleur, qui sont des dispositifs relativement complexes augmentant la complexité et les coût globaux du système de stockage d'énergie électrique.

La figure 2 représente un exemple schématique de la partie centrale d'un système de stockage d'énergie comprenant un onduleur, selon l'invention. Le système de stockage d'énergie électrique comprend une batterie 1 en série avec un hacheur 3, une batterie 2 en série avec un hacheur 4, les hacheurs 3 et 4 étant raccordés à un bus continu 5 lui-même raccordé à un onduleur commun 6 lui-même raccordé au réseau alternatif 7. Ici, le système de stockage d'énergie électrique ne comprend que deux associations 21 et 22 en série d'une batterie, respectivement 1 et 2, avec un hacheur, respectivement 3 et 4. L'onduleur commun 6 peut être raccordé au réseau alternatif 7 par l'intermédiaire ou non d'un transformateur moyenne tension. Le réseau alternatif 7 est par exemple un réseau 380 Volts.

Dans la même hypothèse où les batteries 1 et 2 ont des besoins différents, l'une ayant plus de besoin de puissance en charge P- et l'autre en décharge P+, le besoin de puissance en charge pour la batterie 1 est par exemple de 100 et le besoin de puissance en décharge pour cette même batterie 1 est par exemple de 30, le besoin de puissance en charge pour la batterie 2 est par exemple de 50 et le besoin de puissance en décharge pour cette même batterie 2 est par exemple de 100, l'onduleur commun 6, qui est symétrique, aura un besoin de puissance en charge de 150 et un besoin de puissance en décharge de 130. Comme l'onduleur commun 6 est symétrique, il sera donc dimensionné de manière à satisfaire un besoin de puissance de 150. Par rapport au cas de la figure 1, on peut déjà constater que l'onduleur commun est sous-dimensionné par rapport à un onduleur commun qui aurait correspondu à la somme des deux onduleurs individuels de la figure 1 et qui aurait été dimensionné de manière à satisfaire un besoin de puissance de 200.

Le nombre total d'interrupteurs de puissance sera au minimum de 10 interrupteurs de puissance, 6 interrupteurs de puissance pour l'onduleur et 2 interrupteurs de puissance pour chacun des deux hacheurs bidirectionnels. Là aussi, le nombre global d'interrupteurs de puissance est moindre.

Si l'on veut évaluer plus finement la complexité et le coût global de la partie du système de stockage d'énergie électrique situé en aval des batteries, il faut identifier le nombre et la taille des interrupteurs de puissance, leur taille étant proportionnelle au courant pour une même tension maximale considérée. Dans le cas d'un onduleur commun avec deux hacheurs bidirectionnels asymétriques, la tension d'entrée de l'onduleur est stabilisée. Donc, aucun coefficient de surdimensionnement sur le courant n'est nécessaire. Il faut donc 10 interrupteurs de puissance, dont 6 interrupteurs de puissance avec un besoin de puissance de 150 pour l'onduleur commun 6, un interrupteur de puissance avec un besoin en puissance de 30 et un interrupteur de puissance avec un besoin en puissance de 100 pour le hacheur bidirectionnel asymétrique 3, un interrupteur de puissance avec un besoin en puissance de 50 et un interrupteur de puissance avec un besoin en puissance de 100 pour le hacheur bidirectionnel asymétrique 4, ce qui donne un total de 1180, chiffre représentatif de la participation de cette partie du système de stockage d'énergie électrique au coût et à la complexité globale, à comparer au résultat de 1800 obtenu avec l'architecture de la figure 1. Le résultat le plus faible est le meilleur puisqu'il reflète une complexité moindre et un coût inférieur.

En utilisant l'architecture générale des deuxième et troisième arts antérieurs et en simplifiant la structure des hacheurs bidirectionnels symétriques, le résultat obtenu aurait été de 1600. En effet, il aurait fallu 10 interrupteurs de puissance, dont 6 interrupteurs de puissance avec un besoin de puissance de 200 pour l'onduleur commun, surdimensionné par rapport à l'onduleur commun de la figure 2 à cause de la présence de hacheurs bidirectionnels symétriques et non pas asymétriques, deux interrupteurs de puissance avec un besoin en puissance de 100 pour chaque hacheur bidirectionnel symétrique, ce qui donne un total de 1600, ce qui est mieux que l'architecture de la figure 1 conforme au premier art antérieur, mais moins bien que l'architecture de la figure 2 conforme à l'invention.

Dans l'architecture de la figure 2, toutefois comme dans l'architecture des deuxième et troisième arts antérieurs, il suffit d'un seul système de contrôle de l'onduleur commun.

Ces calculs ont été faits dans le cadre du raccordement de deux batteries à un onduleur commun. Le nombre de batteries raccordées à l'entrée de l'onduleur commun peut être strictement supérieur à deux. Le nombre des dites associations peut avantageusement être compris entre 2 et 15, de préférence entre 5 et 10.

Plus le nombre de batteries raccordées à l'onduleur commun est important, plus les écarts précédents vont généralement se creuser. Lorsque la dissymétrie de besoin de puissance, pour la charge et la décharge, de toutes les batteries raccordées à l'onduleur commun, est dans le même sens, c'est-à-dire lorsque toutes les batteries ont plus de besoin de puissance en charge ou lorsque toutes les batteries ont plus de besoin de puissance en décharge, les écarts précédents vont par contre se réduire, car le seul gain en composants de puissance sera alors réalisé au niveau des hacheurs bidirectionnels asymétriques, sans effet démultiplicateur entraîné par le gain en composants de puissance également réalisé au niveau de l'onduleur commun. Il est possible d'utiliser des hacheurs symétriques à la place de certains seulement des hacheurs asymétriques : cette version dégradée de l'invention donne toutefois un gain plus faible en termes de diminution de coût et de complexité du système de stockage d'énergie électrique.

L'architecture préférentielle proposée au niveau de la figure 2 introduit un hacheur bidirectionnel asymétrique 3 ou 4 en série avec chaque batterie 1 ou 2 connectée en parallèle des autres batteries à l'entrée d'un onduleur commun 6, au niveau du bus continu 5. Les batteries 1 et 2 peuvent être dimensionnées pour certaines, pour des applications en énergie, et pour d'autres, pour des applications en puissance. Leurs tensions de sortie ne seront alors pas équilibrées. Un hacheur bidirectionnel asymétrique 3 ou 4, qui est un convertisseur continu / continu réversible dimensionné différemment dans le sens de la charge et dans le sens de la décharge, est inséré entre chaque batterie 1 ou 2 et le bus continu 5 connecté à l'entrée de l'onduleur commun 6. La réversibilité des hacheurs bidirectionnels asymétriques est obtenue par l'utilisation d'un montage réversible ou bien par la mise en parallèle de deux hacheurs monodirectionnels différents fonctionnant dans des sens contraires.

Le dimensionnement des hacheurs bidirectionnels asymétriques est adapté au besoin en puissance dans un sens et dans l'autre pour chaque chaîne comprenant l'association en série d'une batterie et d'un hacheur bidirectionnel asymétrique. Pour les chaines où la puissance requise est plus importante dans le sens de la charge, les interrupteurs de puissance utilisés pour le conditionnement de la tension dans ce sens sont de calibre plus important que les interrupteurs de puissance dans l'autre sens, et vice et versa pour les chaînes dont la puissance requise est plus importante dans le sens de la décharge.

Dans l'exemple de calcul réalisé entre les figures 1 et 2, les interrupteurs de puissance de l'onduleur commun 6 sont dimensionnés pour que leur courant maximal admissible soit inférieur, de 25% (passage d'un besoin de puissance de 200 à un besoin de puissance de 150) à la somme des majorants de courant maximal admissible d'interrupteur de puissance respectivement de tous les hacheurs bidirectionnels asymétriques, dont le besoin en puissance est de 100 et ils sont deux, reliés à la même entrée de l'onduleur commun 6. Dans l'architecture de la figure 2, l'onduleur commun 6 est sous-dimensionné, grâce à la présence des hacheurs bidirectionnels asymétriques 3 et 4, tout en satisfaisant complètement les besoins en puissance dans toutes les situations de fonctionnement, y compris lorsque toutes les batteries sont en fonctionnement en même temps, par rapport à l'onduleur commun qu'il aurait fallu avec des hacheurs bidirectionnels symétriques. En réalité, l'onduleur commun 6 n'est pas surdimensionné par rapport aux besoins, ce qui garantit une optimisation au niveau coût et complexité de cet onduleur commun 6.

Dans l'exemple de l'architecture de la figure 2, le courant maximal admissible supérieur de l'interrupteur de puissance de chaque hacheur bidirectionnel dimensionné asymétriquement est supérieur d'un facteur deux pour le hacheur 4, et d'un facteur légèrement supérieur à trois pour le hacheur 3.

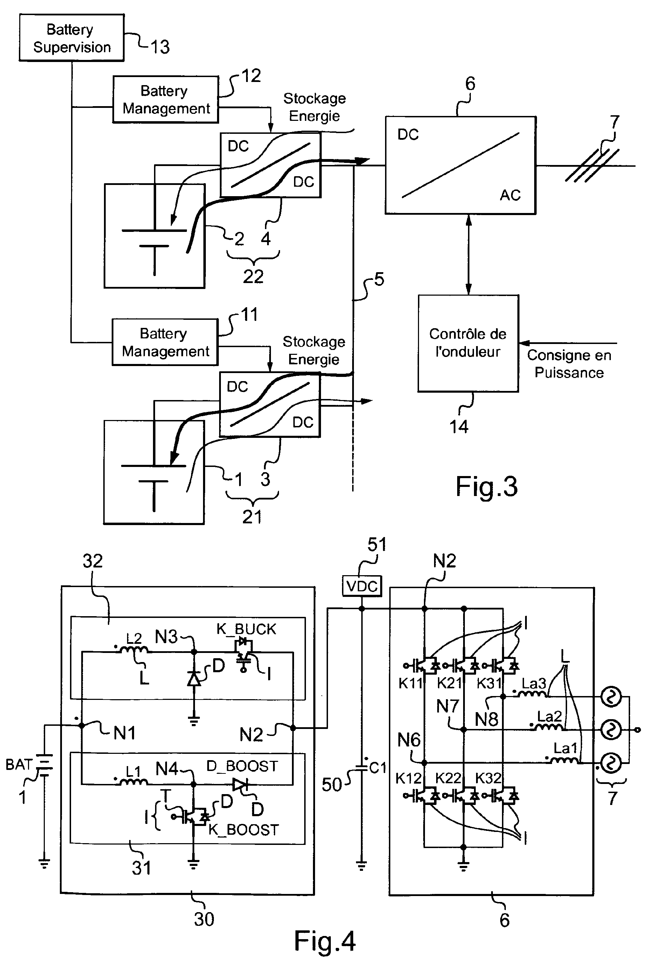

Dans l'exemple de l'architecture de la figure 2, chaque hacheur bidirectionnel dimensionné asymétriquement comprend de préférence deux interrupteurs de puissance. Des exemples de réalisation de circuits électriques présentés ultérieurement au niveau des figures 4 à 7 le montrent.

Dans l'exemple de l'architecture de la figure 2, chaque hacheur bidirectionnel dimensionné asymétriquement 3 ou 4 est un hacheur survolteur. L'utilisation de hacheurs survolteurs 3 et 4 en entrée de l'onduleur commun 6 permet à cet onduleur commun 6 de voir une tension fixe plus élevée et donc de s'en trouver optimisé, notamment au niveau de la taille des interrupteurs de puissance qui est réduite et de la réduction des circuits magnétiques. Cette tension d'entrée de l'onduleur commun est avantageusement comprise entre 300 et 2000 volts, de préférence entre 400 et 1500 volts, encore plus de préférence entre 800 et 1200 volts, ce qui représente une tension élevée.

La figure 3 représente un exemple schématique de la partie centrale d'un système de stockage d'énergie comprenant un onduleur, montrant quelques fonctions périphériques du système de stockage, selon l'invention. Les éléments déjà décrits au niveau de la figure 2 ne seront pas décrits à nouveau.

Chaque hacheur, 3 ou 4, a son propre système de management, 11 ou 12, de batterie associée, 1 ou 2. Les systèmes de management 11 et 12 de batterie sont reliés à un système global de supervision qui est le contrôleur 13 des batteries 1 et 2 et qui pilote les batteries 1 et 2 par l'intermédiaire des systèmes de management 11 et 12.

L'onduleur commun 6 est relié à un contrôleur 14 qui pilote l'onduleur commun 6. Le contrôleur 14 de l'onduleur commun 6 et le contrôleur 13 des batteries 1 et 2 sont reliés entre eux de manière à synchroniser entre eux leurs deux pilotages respectifs. Le contrôleur 13 des batteries 1 et 2 est de plus haut niveau que les systèmes de management 11 et 12 propres aux batteries 1 et 2. Il peut être intégré dans le contrôleur 14 de l'onduleur commun 6 ou bien dans la gestion de puissance de l'installation ou bien dans les contrôleurs 11 et 12 des Batteries 1 et 2. Le rôle de ce contrôleur 13 des batteries 1 et 2 est de désigner un ordre de priorité entre les batteries 1 et 2 en fonction de la nature de l'application considérée ou de l'utilisation considérée.

Le contrôleur 14 de l'onduleur commun 6 reçoit une consigne en puissance consommée sur le réseau alternatif 7 ou en puissance fournie sur le réseau alternatif 7. Le contrôleur 14 de l'onduleur commun 6 régule les courants triphasés sur le réseau alternatif 7 et régule la tension d'entrée de l'onduleur commun qui est la tension du bus continu 5.

Chaque batterie 1 et 2 proprement dite ou autre type d'unité de stockage d'énergie électrique a un système de management 11 et 12 qui lui est adapté et qui permet donc une adaptation, au besoin en énergie ou en puissance, pour l'application et pour la technologie du type d'unité de stockage d'énergie électrique utilisée. Par l'intermédiaire de chaque système de management 11 ou 12 associé, chaque hacheur bidirectionnel asymétrique correspondant 3 ou 4 contrôle le courant dans les deux sens, aussi bien dans le sens de la charge que dans le sens de la décharge, pour sa batterie respective 1 ou 2, et ceci de façon asymétrique en fonction des besoins différents en charge et décharge.

Le système de stockage d'énergie électrique précédemment décrit peut être relié à un réseau électrique alternatif 7 au sein d'une installation électrique de manière à pouvoir alimenter ledit réseau électrique alternatif. Ce système de stockage d'énergie électrique est de préférence disposé dans un conteneur extérieur. La puissance de l'onduleur commun 6 peut avantageusement être comprise entre 50kW et 5MW, de préférence comprise entre 500kW et 2MW, ce qui correspond à l'alimentation d'une installation de grande taille. L'installation électrique est avantageusement une installation électrique avec des unités de production d'énergie associées à des unités de stockage d'énergie. Dans cette installation électrique, un ou plusieurs panneaux solaires et ou d'autres sources telles que une ou plusieurs éoliennes sont reliés après adaptation de leur tension, en parallèle des batteries 1 et 2, à l'entrée de l'onduleur commun 6, respectivement par l'intermédiaire d'un ou de plusieurs hacheurs monodirectionnels.

L'invention concerne également un circuit de système de stockage d'énergie électrique, comprenant, successivement reliés en série, une batterie 1 apte à être chargée et déchargée asymétriquement, un hacheur bidirectionnel asymétrique 3 et un onduleur 6 surdimensionné par rapport au hacheur 3, le hacheur bidirectionnel 3 étant dimensionné asymétriquement pour la charge et la décharge de la batterie 1. L'onduleur est surdimensionné par rapport au hacheur 3, car son entrée est aussi destinée à recevoir la sortie d'un autre hacheur, par exemple le hacheur 4. Ce circuit correspond à une ligne de charge ou de décharge entre une batterie 1 et le réseau alternatif 7.

Les figures 4 à 8 représentent des exemples de circuits électriques réalisant la partie centrale d'un système de stockage d'énergie comprenant un onduleur, selon l'invention. Dans l'onduleur commun 6, comme dans les hacheurs bidirectionnels asymétriques 3 et 4 des figures 2 et 3, les interrupteurs de puissance comprennent chacun un seul transistor de puissance pouvant être obtenu par la mise en parallèle, en série ou série/parallèle de transistors et de diodes. Ces transistors de puissance peuvent être par exemple de type IGBT (Insulated Gate Bipolar Transistor) ou de type GTO (Gate Turn Off thyristor) ou de type Thyristor ou MOSFET ou JFET ou BIPOLAIRES.

Les interrupteurs de puissance, qui comprennent un transistor de puissance T monté tête-bêche avec une diode D, sont notés I ; ils sont pilotés par l'intermédiaire de la grille du transistor T. Les diodes sont notées D. Les inductances sont notées L, elles valent de l'ordre de quelques milli Henry. Les diodes D, interrupteurs I, transistors T, inductances L, n'ont pas forcément les mêmes valeurs d'un élément à l'autre. Par exemple, deux inductances L peuvent avoir des valeurs différentes entre elles.

Sur chacune des figures 4 à 8, la connexion d'une seule association en série d'une batterie avec un hacheur bidirectionnel asymétrique est montrée ; cependant, l'entrée de l'onduleur, qui est le noeud N2, est destinée à recevoir plusieurs associations de type similaire. Le système de stockage d'énergie comprend un onduleur commun 6, un hacheur bidirectionnel asymétrique, une batterie 1. La batterie 1 est connectée entre le noeud N1, entrée du hacheur, et la masse. Entre le noeud N2, qui est à la fois l'entrée de l'onduleur commun 6 et la sortie du hacheur, et la masse, se trouve une capacité 50. Une alimentation continue 51 est reliée au noeud N2.

L'onduleur 6 comprend des noeuds internes N6, N7 et N8. Entre les trois noeuds internes N6, N7 et N8 d'une part et le réseau alternatif 7 d'autre part, sont branchées en parallèle respectivement trois inductances L. Entre l'entrée N2 de l'onduleur 6 d'une part et les trois noeuds internes N6, N7 et N8 d'autre part, sont branchés en parallèle respectivement trois interrupteurs de puissance I. Entre les trois noeuds internes N6, N7 et N8 d'une part, et la masse d'autre part, sont branchés en parallèle respectivement trois interrupteurs de puissance I.

La figure 4 représente un premier exemple de circuit électrique réalisant la partie centrale d'un système de stockage d'énergie comprenant un onduleur, selon l'invention. Le hacheur bidirectionnel asymétrique 30 comprend un étage de conversion élévateur 31 pour le fonctionnement en décharge de la batterie 1 et un étage de conversion abaisseur 32 pour le fonctionnement en charge de la batterie 1. De la batterie 1 à l'entrée N2 de l'onduleur 6, le hacheur 30 est survolteur, il réalise une conversion continu / continu avec élévation de tension.

Le hacheur 30 comprend deux noeuds internes N3 et N4. Entre le noeud N1 et le noeud N3 est branchée une inductance L. Entre le noeud N3 et la masse est branchée une diode D. Entre le noeud N3 et l'entrée N2 de l'onduleur 6 est branché un interrupteur de puissance I. Entre le noeud N1 et le noeud N4 est branchée une inductance L. Entre le noeud N4 et la masse est branché un interrupteur de puissance I. Entre le noeud N4 et l'entrée N2 de l'onduleur 6 est branchée une diode D.

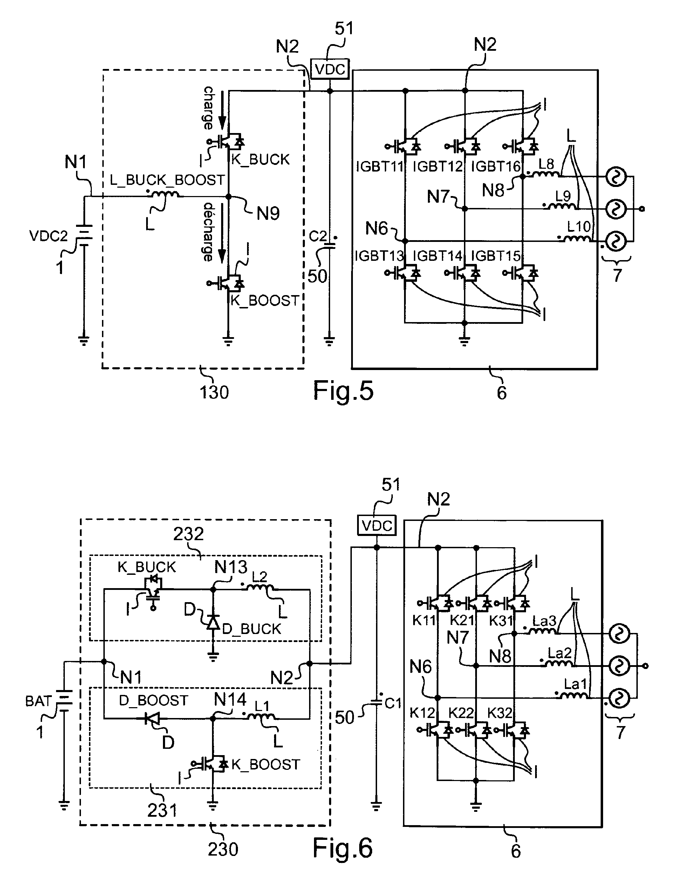

La figure 5 représente un deuxième exemple de circuit électrique réalisant la partie centrale d'un système de stockage d'énergie comprenant un onduleur, selon l'invention. Le hacheur bidirectionnel asymétrique 130 est réversible. De la batterie 1 à l'entrée N2 de l'onduleur 6, le hacheur 130 est survolteur, il réalise une conversion continu / continu avec élévation de tension.

Le hacheur 130 comprend un noeud interne N9. Entre le noeud N1 et le noeud N9 est branchée une inductance L. Entre le noeud N9 et l'entrée N2 de l'onduleur 6 est branché un interrupteur de puissance I. Entre le noeud N9 et la masse est branché un interrupteur de puissance I. Lors de la charge de la batterie 1, l'interrupteur de puissance I situé entre les noeuds N2 et N9 est passant tandis que l'interrupteur de puissance I situé entre le noeud N9 et la masse est bloqué. Lors de la décharge de la batterie 1, l'interrupteur de puissance I situé entre les noeuds N2 et N9 est bloqué tandis que l'interrupteur de puissance I situé entre le noeud N9 et la masse est passant.

La figure 6 représente un troisième exemple de circuit électrique réalisant la partie centrale d'un système de stockage d'énergie comprenant un onduleur, selon l'invention. Le hacheur bidirectionnel asymétrique 230 comprend un étage de conversion élévateur 231 pour le fonctionnement en charge de la batterie 1 et un étage de conversion abaisseur 232 pour le fonctionnement en décharge de la batterie 1. De la batterie 1 à l'entrée N2 de l'onduleur 6, le hacheur 230 est dévolteur, il réalise une conversion continu / continu avec diminution de tension.

Le hacheur 230 comprend deux noeuds internes N13 et N14. Entre le noeud N1 et le noeud N13 est branché un interrupteur de puissance I. Entre le noeud N13 et la masse est branchée une diode D. Entre le noeud N13 et l'entrée N2 de l'onduleur 6 est branchée une inductance L. Entre le noeud N1 et le noeud N14 est branchée une diode D. Entre le noeud N14 et la masse est branché un interrupteur de puissance I. Entre le noeud N 14 et l'entrée N2 de l'onduleur 6 est branchée une inductance L.

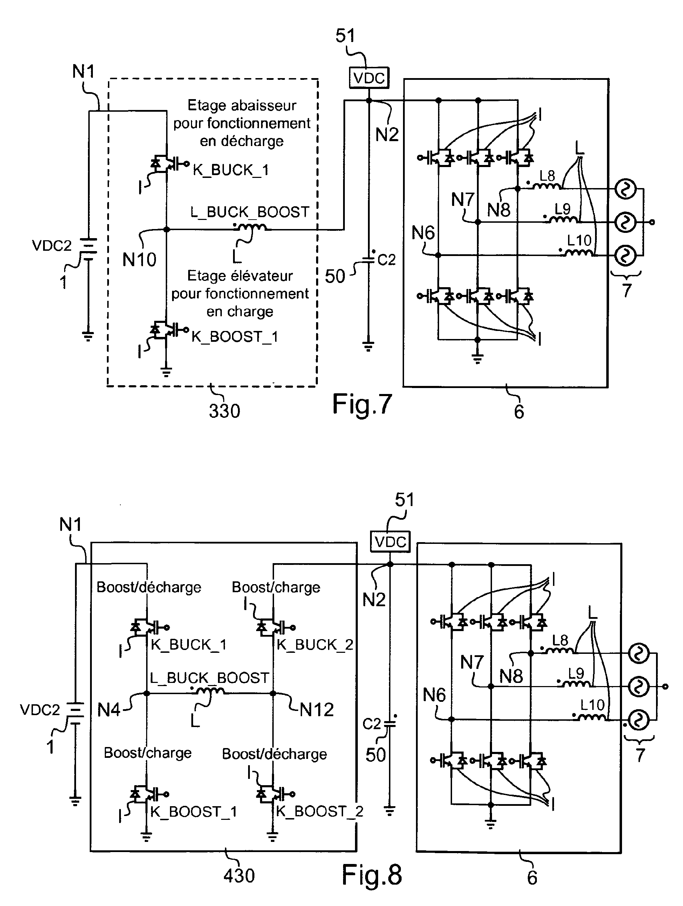

La figure 7 représente un quatrième exemple de circuit électrique réalisant la partie centrale d'un système de stockage d'énergie comprenant un onduleur, selon l'invention. Le hacheur bidirectionnel asymétrique 330 est réversible. De la batterie 1 à l'entrée N2 de l'onduleur 6, le hacheur 330 est dévolteur, il réalise une conversion continu / continu avec diminution de tension.

Le hacheur 330 comprend un noeud interne N10. Entre le noeud N1 et le noeud N10 est branché un interrupteur de puissance I. Entre le noeud N10 et l'entrée N2 de l'onduleur 6 est branchée une inductance L. Entre le noeud N10 et la masse est branché un interrupteur de puissance I. Le fonctionnement est symétrique de celui de la figure 5. La tension est abaissée en décharge, la tension est élevée en charge.

La figure 8 représente un cinquième exemple de circuit électrique réalisant la partie centrale d'un système de stockage d'énergie comprenant un onduleur, selon l'invention. Le hacheur bidirectionnel asymétrique 430 est un convertisseur continu / continu quatre quadrants bidirectionnel asymétrique pouvant fonctionner soit en hacheur survolteur soit en hacheur dévolteur.

Le hacheur 330 comprend deux noeuds internes N11 et N12. Entre le noeud N1 et le noeud N11 est branchée un interrupteur de puissance I. Entre le noeud N12 et l'entrée N2 de l'onduleur 6 est branché un interrupteur de puissance I. Entre les deux noeuds N11 et N12 est branchée une inductance L. Entre le noeud N11 et la masse est branché un interrupteur de puissance I. Entre le noeud N12 et la masse est branché un interrupteur de puissance I.

Bien entendu, la présente invention n'est pas limitée aux exemples et au mode de réalisation décrits et représentés, mais elle est susceptible de nombreuses variantes accessibles à l'homme de l'art. En particulier, la réalisation de l'onduleur assurant la conversion continu/alternatif entre le BUS DC commun et le réseau peut avoir un nombre illimité de variante faisant appel notamment aux structures des onduleurs multi-niveaux, onduleur de courant ou de tension et ayant la possibilité de fonctionner de manière déconnectée du réseau électrique ou bien connectée. De même les interrupteurs de puissance peuvent être remplacés par toutes autres technologies de semi-conducteurs permettant la tenue des tensions et courants correspondants aux niveaux de tension et puissance mises en jeu.

## Revendications

1. Système de stockage d'énergie électrique, comprenant :
- un onduleur (6),
- plusieurs associations (21, 22), d'une unité de stockage d'énergie électrique (1, 2) en série avec un hacheur bidirectionnel (3, 4), reliées en parallèle à une même entrée de l'onduleur (6), du côté de leur hacheur (3, 4),
**caractérisé en ce que :**
- au moins un hacheur bidirectionnel (3, 4), associé à une unité de stockage d'énergie électrique (1, 2) apte à être chargée et déchargée asymétriquement, est dimensionné asymétriquement pour la charge et la décharge de ladite unité de stockage associée (1, 2).

2. Système de stockage d'énergie électrique selon la revendication 1, **caractérisé en ce que :**
- au moins plusieurs des hacheurs bidirectionnels (3, 4), de préférence tous les hacheurs bidirectionnels (3, 4), respectivement associés à des unités de stockage (1, 2) aptes à être chargées et déchargées asymétriquement, sont dimensionnés asymétriquement pour la charge et la décharge des dites unités de stockage (1, 2) associées.

3. Système de stockage d'énergie électrique selon l'une quelconque des revendications 1 à 2, **caractérisé en ce que :**
- un ou plusieurs de ces hacheurs bidirectionnels (3, 4) dimensionnés asymétriquement sont dimensionnés asymétriquement de manière à ce que leur ou leurs interrupteurs de puissance (I) utilisés dans le sens de la décharge présentent un courant maximal admissible supérieur à celui de leur ou de leurs interrupteurs de puissance (I) utilisés dans le sens de la charge.

4. Système de stockage d'énergie électrique selon l'une quelconque des revendications 1 à 3, **caractérisé en ce que :**
- un ou plusieurs de ces hacheurs bidirectionnels (3, 4) dimensionnés asymétriquement sont dimensionnés asymétriquement de manière à ce que leur ou leurs interrupteurs de puissance (I) utilisés dans le sens de la charge présentent un courant maximal admissible supérieur à celui de leur ou de leurs interrupteurs de puissance (I) utilisés dans le sens de la décharge.

5. Système de stockage d'énergie électrique selon l'une quelconque des revendications 1 à 2, **caractérisé en ce que :**
- un ou plusieurs de ces hacheurs bidirectionnels (3, 4) dimensionnés asymétriquement sont dimensionnés asymétriquement de manière à ce que leur ou leurs interrupteurs de puissance (I) utilisés dans le sens de la décharge présentent un courant maximal admissible supérieur à celui de leur ou de leurs interrupteurs de puissance (I) utilisés dans le sens de la charge,
- un ou plusieurs de ces hacheurs bidirectionnels (3, 4) dimensionnés asymétriquement sont dimensionnés asymétriquement de manière à ce que leur ou leurs interrupteurs de puissance (I) utilisés dans le sens de la charge présentent un courant maximal admissible supérieur à celui de leur ou de leurs interrupteurs de puissance (I) utilisés dans le sens de la décharge,
- les interrupteurs de puissance (I) de l'onduleur (6) sont dimensionnés pour que leur courant maximal admissible soit inférieur, de préférence inférieur d'au moins 10%, encore plus de préférence inférieur d'au moins 20%, à la somme des majorants de courant maximal admissible d'interrupteur de puissance respectivement de tous les hacheurs (3, 4) reliés à ladite même entrée de l'onduleur (6), le cas échéant majorée du ou des courants maximaux admissibles d'une éventuelle ou d'éventuelles unités de stockage non associées à des hacheurs mais reliées à ladite même entrée de l'onduleur (6).

6. Système de stockage d'énergie électrique selon l'une quelconque des revendications 3 à 5, **caractérisé en ce que** ledit courant maximal admissible supérieur du ou des interrupteurs de puissance (I) du ou des hacheurs bidirectionnels (3, 4) dimensionnés asymétriquement est supérieur d'au moins un facteur un et demi, de préférence d'au moins un facteur cinq, encore plus de préférence d'au moins un facteur vingt.

7. Système de stockage d'énergie électrique selon l'une quelconque des revendications précédentes, **caractérisé en ce que** ledit ou lesdits hacheurs bidirectionnels (3, 4) dimensionnés asymétriquement comprennent chacun au plus quatre interrupteurs de puissance (I), de préférence chacun au plus deux interrupteurs de puissance (I).

8. Système de stockage d'énergie électrique selon l'une quelconque des revendications 3 à 7, **caractérisé en ce que** ledit ou lesdits interrupteurs de puissance peuvent être choisis parmi une ou plusieurs familles de transistors parmi lesquelles des transistors de puissance de type IGBT (Insulated Gate Bipolar Transistor) ou de type GTO (Gate Turn Off thyristor) ou de type Thyristor ou MOSFET ou JFET ou BIPOLAIRES.

9. Système de stockage d'énergie électrique selon l'une quelconque des revendications précédentes, **caractérisé en ce que** la puissance de l'onduleur (6) est comprise entre 50kW et 5MW, de préférence comprise entre 500kW et 2MW.

10. Système de stockage d'énergie électrique selon l'une quelconque des revendications précédentes, **caractérisé en ce que**, parmi les unités de stockage d'énergie électriques (1, 2), se trouvent une ou plusieurs batteries et/ou un ou plusieurs super-condensateurs.

11. Système de stockage d'énergie électrique selon l'une quelconque des revendications précédentes, **caractérisé en ce que** le nombre des dites associations (21, 22) est compris entre 2 et 15, de préférence entre 5 et 10.

12. Système de stockage d'énergie électrique selon l'une quelconque des revendications précédentes, **caractérisé en ce que** le hacheur bidirectionnel (3, 4) ou la majorité, ou de préférence la totalité, des hacheurs bidirectionnels (3, 4), appartenant à une ou à plusieurs des dites associations (21, 22) et étant dimensionné(s) asymétriquement, est un hacheur survolteur ou sont des hacheurs survolteurs.

13. Système de stockage d'énergie électrique selon l'une quelconque des revendications précédentes, **caractérisé en ce que** la tension d'entrée de l'onduleur (6) est comprise entre 300 et 2000 volts, de préférence entre 400 et 1500 volts, encore plus de préférence entre 600 et 1200 volts.

14. Système de stockage d'énergie électrique selon l'une quelconque des revendications précédentes, **caractérisé en ce qu'il** comprend un contrôleur (14) de l'onduleur (6) qui pilote l'onduleur (6) et un contrôleur (13) des unités de stockage (1, 2) qui pilote les unités de stockage (1, 2), les deux contrôleurs (13, 14) étant reliés entre eux de manière à synchroniser entre eux les deux pilotages ou **en ce qu'**il comprend un contrôleur (14) de l'onduleur (6) qui pilote l'onduleur (6) et plusieurs contrôleurs (11, 12) respectivement des unités de stockage (1, 2) qui pilote les unités de stockage (1, 2), le contrôleur (14) de l'onduleur (6) étant relié aux contrôleurs (11, 12) respectifs des unités de stockage (1, 2) de manière à synchroniser son pilotage avec leurs pilotages respectifs.

15. Installation électrique comprenant un réseau électrique alternatif (7) et un système de stockage d'énergie électrique selon l'une quelconque des revendications précédentes qui est relié audit réseau électrique alternatif (7) de manière à pouvoir alimenter ledit réseau électrique alternatif (7).

16. Installation électrique selon la revendication 15, caractérisée en que l'installation électrique est une installation électrique de production ou de distribution d'énergie électrique.

17. Installation électrique selon la revendication 15 ou 16, **caractérisée en ce que** un ou plusieurs panneaux solaires et ou une ou plusieurs piles à combustible et ou une ou plusieurs éoliennes sont reliés après adaptation de tension, en parallèle des unités de stockage d'énergie (1, 2), à ladite entrée de l'onduleur (6), de préférence respectivement par l'intermédiaire d'un ou de plusieurs hacheurs monodirectionnels.

18. Circuit de système de stockage d'énergie électrique, comprenant, successivement reliés en série, une unité de stockage d'énergie électrique (1, 2) apte à être chargée et déchargée asymétriquement, un hacheur bidirectionnel (3, 4) et un onduleur (6) surdimensionné par rapport au hacheur bidirectionnel (3, 4), une même entrée de l'onduleur (6) étant aussi destinée à recevoir une sortie d'un autre hacheur, **caractérisé en ce que** le hacheur bidirectionnel (3, 4) est dimensionné asymétriquement pour la charge et la décharge de ladite unité de stockage (1, 2).

## Patentansprüche

1. System zum Speichern elektrischer Energie, umfassend:
- einen Wechselrichter (6),
- mehrere Verbindungen (21, 22) einer Einheit zum Speichern elektrischer Energie (1, 2) in Serie mit einem bidirektionalen Gleichstromsteller (3, 4), die parallel an einen gleichen Eingang des Wechselrichters (6) auf der Seite ihres Gleichstromstellers (3, 4) angeschlossen sind,
**dadurch gekennzeichnet, dass**:
- mindestens ein bidirektionaler Gleichstromsteller (3, 4), der mit einer Einheit zum Speichern elektrischer Energie (1, 2) verbunden ist, die geeignet ist, asymmetrisch geladen und entladen zu werden, asymmetrisch für das Laden und das Entladen der verbundenen Einheit zum Speichern (1, 2) dimensioniert ist.

2. System zum Speichern elektrischer Energie nach Anspruch 1, **dadurch gekennzeichnet, dass**:
- mindestens mehrere bidirektionale Gleichstromsteller (3, 4), vorzugsweise alle bidirek-tionalen Gleichstromsteller (3, 4), die jeweils mit den Einheiten zum Speichern (1, 2) verbunden sind, die geeignet sind, asymmetrisch geladen und entladen zu werden, asymmetrisch für das Laden und das Entladen der verbundenen Einheiten zum Speichern (1, 2) dimensioniert sind.

3. System zum Speichern elektrischer Energie nach einem der Ansprüche 1 bis 2, **dadurch gekennzeichnet, dass**:
- ein oder mehrere bidirektionale Gleichstromsteller (3, 4), die asymmetrisch dimensioniert sind, derart asymmetrisch dimensioniert sind, dass ihr oder ihre Leistungsschalter (I), die in Entladerichtung verwendet werden, einen zulässigen Maximalstrom aufweisen, der höher als jener ihres oder ihre Leistungsschalter (I) ist, die in Laderichtung verwendet werden.

4. System zum Speichern elektrischer Energie nach einem der Ansprüche 1 bis 3, **dadurch gekennzeichnet, dass**:
- ein oder mehrere bidirektionale Gleichstromsteller (3, 4), die asymmetrisch dimensioniert sind, derart asymmetrisch dimensioniert sind, dass ihr oder ihre Leistungsschalter (I), die in Laderichtung verwendet werden, einen zulässigen Maximalstrom aufweisen, der höher als jener ihres oder ihre Leistungsschalter (I) ist, die in Entladerichtung verwendet werden.

5. System zum Speichern elektrischer Energie nach einem der Ansprüche 1 bis 2, **dadurch gekennzeichnet, dass**:
- ein oder mehrere bidirektionale Gleichstromsteller (3, 4), die asymmetrisch dimensioniert sind, derart asymmetrisch dimensioniert sind, dass ihr oder ihre Leistungsschalter (I), die in Entladerichtung verwendet werden, einen zulässigen Maximalstrom aufweisen, der höher als jener ihres oder ihre Leistungsschalter (I) ist, die in Laderichtung verwendet werden,
- ein oder mehrere bidirektionale Gleichstromsteller (3, 4), die asymmetrisch dimensioniert sind, derart asymmetrisch dimensioniert sind, dass ihr oder ihre Leistungsschalter (I), die in Laderichtung verwendet werden, einen zulässigen Maximalstrom aufweisen, der höher als jener ihres oder ihre Leistungsschalter (I) ist, die in Entladerichtung verwendet werden,
- die Leistungsschalter (I) des Wechselrichters (6) dimensioniert sind, dass ihr zulässiger Maximalstrom niedriger, vorzugsweise um mindestens 10 % niedriger, insbesondere um mindestens 20 % niedriger als die Summe der Erhöhungen des zulässigen Maximalstroms des Leistungsschalters jeweils aller Gleichstromsteller (3, 4) ist, die an den gleichen Eingang des Wechselrichters (6) angeschlossen sind, die gegebenenfalls durch den zulässigen Maximalstrom oder die zulässigen Maximalströme einer eventuellen Einheit zum Speichern oder eventueller Einheiten zum Speichern erhöht ist, die mit den Gleichstromstellern nicht verbunden ist oder sind, sondern an den gleichen Eingang des des Wechselrichters (6) angeschlossen ist oder sind.

6. System zum Speichern elektrischer Energie nach einem der Ansprüche 3 bis 5, **dadurch gekennzeichnet, dass** der höhere zulässige Maximalstrom des oder der Leistungsschalter (I) des oder der bidirektionalen Gleichstromsteller (3, 4), die asymmetrisch dimensioniert sind, mindestens um einen Faktor eineinhalb, vorzugsweise mindestens um einen Faktor fünf, insbesondere um mindestens einen Faktor zwanzig höher ist.

7. System zum Speichern elektrischer Energie nach einem der vorhergehenden Ansprüche, **dadurch gekennzeichnet, dass** der oder die bidirektionalen Gleichstromsteller (3, 4), die asymmetrisch dimensioniert sind, jeweils höchstens vier Leistungsschalter (I), vorzugsweise jeweils höchstens zwei Leistungsschalter (I) aufweisen.

8. System zum Speichern elektrischer Energie nach einem der Ansprüche 3 bis 7, **dadurch gekennzeichnet, dass** der oder die Leistungsschalter aus einer oder mehreren Familien von Transistoren ausgewählt werden können, zu denen IGBT-Leistungstransistoren (Insulated Gate Bipolar Transistor) oder GTO-Thyristoren (Gate Turn Off Thyristor) oder Leistungs-MOSFETs oder JFet-Transistoren oder Bipolartransistoren gehören.

9. System zum Speichern elektrischer Energie nach einem der vorhergehenden Ansprüche, **dadurch gekennzeichnet, dass** die Leistung des Wechselrichters (6) zwischen 50KW und 5MW, vorzugsweise zwischen 500KW und 2MW beträgt.

10. System zum Speichern elektrischer Energie nach einem der vorhergehenden Ansprüche, **dadurch gekennzeichnet, dass** sich zwischen den Einheiten zum Speichern elektrischer Energie (1, 2) eine oder mehrere Batterien und/oder ein oder mehrere Superkondensatoren befinden.

11. System zum Speichern elektrischer Energie nach einem der vorhergehenden Ansprüche, **dadurch gekennzeichnet, dass** die Anzahl der Verbindungen (21, 22) zwischen 2 und 15, vorzugsweise zwischen 5 und 10 beträgt.

12. System zum Speichern elektrischer Energie nach einem der vorhergehenden Ansprüche, **dadurch gekennzeichnet, dass** der bidirektionale Gleichstromsteller (3, 4) oder die Mehrheit oder vorzugsweise die Gesamtheit der bidirektionalen Gleichstromsteller (3, 4), der (die) zu einer oder mehreren der Verbindungen (21, 22) gehört (gehören) und asymmetrisch dimensioniert ist (sind), ein Hochsetzgleichstromsteller ist oder Hochsetzgleichstromsteller sind.

13. System zum Speichern elektrischer Energie nach einem der vorhergehenden Ansprüche, **dadurch gekennzeichnet, dass** die Eingangsspannung des Wechselrichters (6) zwischen 300 und 2000 Volt, vorzugsweise zwischen 400 und 1500 Volt, insbesondere zwischen 600 und 1200 Volt beträgt.

14. System zum Speichern elektrischer Energie nach einem der vorhergehenden Ansprüche, **dadurch gekennzeichnet, dass** es eine Steuerung (14) des Wechselrichters (6), die den Wechselrichter (6) steuert, und eine Steuerung (13) der Einheiten zum Speichern (1, 2) aufweist, die die Einheiten zum Speichern steuert (1, 2), wobei die zwei Steuerungen (13, 14) miteinander verbunden sind, um die zwei Steuervorgänge untereinander zu synchronisieren, oder, dass sie eine Steuerung (14) des Wechselrichters (6), die den Wechselrichter (6) steuert, und mehrere Steuerungen (11, 12) jeweils von den Einheiten zum Speichern (1, 2) aufweist, die die Einheiten zum Speichern (1, 2) steuern, wobei die Steuerung (14) des Wechselrichters (6) an die jeweiligen Steuerungen (11, 12) der Einheiten zum Speichern (1, 2) angeschlossen ist, um ihren Steuervorgang mit deren jeweiligen Steuervorgängen zu synchronisieren.

15. Elektrische Anlage, umfassend ein Wechselstromnetz (7) und ein System zum Speichern elektrischer Energie nach einem der vorhergehenden Ansprüche, das an das Wechselstromnetz (7) derart angeschlossen ist, dass es das Wechselstromnetz (7) mit Strom versorgen kann.

16. Elektrische Anlage nach Anspruch 15, **dadurch gekennzeichnet, dass** die elektrische Anlage eine elektrische Anlage zum Erzeugen oder zum Verteilen von elektrischer Energie ist.

17. Elektrische Anlage nach Anspruch 15 oder 16, **dadurch gekennzeichnet, dass** ein oder mehrere Sonnenkollektoren und oder eine oder mehrere Brennstoffzellen und oder ein oder mehrere Windgeneratoren nach Anpassung der Spannung parallel zu den Einheiten zum Speichern elektrischer Energie (1, 2) an dem Eingang des Wechselrichters (6), vorzugsweise jeweils mithilfe von einem oder mehreren monodirektionalen Gleichstromstellern angeschlossen sind.

18. Kreislauf eines Systems zum Speichern elektrischer Energie, umfassend, nacheinander in Serie angeschlossen, eine Einheit zum Speichern elektrischer Energie (1, 2), die geeignet ist, asymmetrisch geladen und entladen zu werden, einen bidirektionalen Gleichstromsteller (3, 4) und einen Wechselrichter (6), der gegenüber dem bidirektionalen Gleichstromsteller (3, 4) überdimensioniert ist, einen gleichen Eingang des Wechselrichters (6), der auch dazu bestimmt ist, einen Ausgang eines anderen Wechselrichters aufzunehmen, **dadurch gekennzeichnet, dass** der bidirektionale Gleichstromsteller (3, 4) asymmetrisch für das Laden und das Entladen der verbundenen Einheit zum Speichern (1, 2) dimensioniert ist.

## Claims

1. An electric energy storage system comprising:
- an inverter (6),
- several associations (21, 22), of an electric energy storage unit (1, 2) in series with a bidirectional chopper (3, 4), connected in parallel to a same input of the inverter (6), on the side of their chopper (3, 4),
**characterized in that**
at least one bidirectional chopper (3, 4), associated with an electric energy storage unit (1, 2) that can be charged and discharged asymmetrically, is sized asymmetrically for the charge and discharge of said associated storage unit (1, 2).

2. The electric energy storage system according to claim 1, **characterized in that**:
- at least some of the bidirectional choppers (3, 4), preferably all of the bidirectional choppers (3, 4), respectively associated with storage units (1, 2) capable of being charged and discharged asymmetrically, are sized asymmetrically for the charge and discharge of said associated storage units (1, 2).

3. The electric energy storage unit according to any one of claims 1 to 2, **characterized in that**:
- one or more of said asymmetrically-sized bidirectional choppers (3, 4) are sized asymmetrically such that their power switch(es) (I) used in the discharge direction has(ve) a maximum allowable current greater than that of their power switch(es) (I) used in the charge direction.

4. The electric energy storage unit according to any one of claims 1 to 3, **characterized in that**:
- one or more of these asymmetrically-sized bidirectional choppers (3, 4) are sized asymmetrically such that their power switch(es) (I) used in the charge direction has(ve) a higher maximum allowable current greater than that of their power switch(es) (I) used in the discharge direction.

5. The electric energy storage system according to any one of claims 1 to 2, **characterized in that**:
- one or more of these asymmetrically-sized bidirectional choppers (3, 4) are sized asymmetrically such that their power switch(es) (I) used in the discharge direction has(ve) a maximum allowable current higher than that of their power switch(es) (I) used in the charge direction,
- one or more of these asymmetrically-sized bidirectional choppers (3, 4) are sized asymmetrically such that their power switch(es) (I) used in the charge direction has(ve) a maximum allowable current higher than that of their power switch(es) (I) used in the discharge direction,
- the power switches (I) of the inverter (6) are sized so that their maximum allowable current is lower, preferably at least 10% lower, still more preferably at least 20% lower, than the sum of the maximum allowable power switch current upper bounds respectively of all of the choppers (3, 4) connected to said same input of the inverter (6), if applicable increased by the maximum allowable currents of any storage unit(s) not associated with choppers but connected to said same inverter input (6).

6. The electric energy storage system according to any one of claims 3 to 5, **characterized in that** said higher maximum allowable current of the power switch(es) (I) of the asymmetrically-sized bidirectional choppers (3, 4) is(are) higher by at least a factor of 1 ½, preferably at least a factor of 5, still more preferably at least a factor of 20.

7. The electric energy storage system according to any one of the preceding claims, **characterized in that** said asymmetrically-sized bidirectional chopper(s) (3, 4) each comprise no more than four power switches (I), preferably each no more than two power switches (I).

8. The electric energy storage system according to any one of claims 3 to 7, **characterized in that** said power switch(es) may be chosen from among one or several families of transistors including power transistors of the IGBT (Insulated Gate Bipolar Transistor) type or the GTO (Gate Turn Off thyristor) type or the Thyristor or MOSFET or JFET or BIPOLAR type.

9. The electric energy storage system according to any one of the preceding claims, **characterized in that** the power of the inverter (6) is comprised between 50 kW and 5 MW, preferably comprised between 500 kW and 2 MW.

10. The electric energy storage system according to any one of the preceding claims, **characterized in that** among the electric energy storage units (1, 2), there are one or more batteries and/or one or more supercapacitors.

11. The electric energy storage system according to any one of the preceding claims, **characterized in that** the number of said associations (21, 22) is comprised between 2 and 15, preferably between 5 and 10.

12. The electric energy storage system according to any one of the preceding claims, **characterized in that** the bidirectional chopper (3, 4) or the majority, or preferably all, of the bidirectional choppers (3, 4), belonging to one or more of said associations (21, 22) and being sized asymmetrically, is or are (a) booster chopper(s).

13. The electric energy storage system according to any one of the preceding claims, **characterized in that** the input voltage of the inverter (6) is comprised between 300 and 2000 V, preferably between 400 and 1500 V, still more preferably between 600 and 1200 V.

14. The electric energy storage system according to any one of the preceding claims, **characterized in that** it comprises a controller (14) for the inverter (6) that drives the inverter (6) and a controller (13) of the storage units (1, 2) that drives the storage units (1, 2), the two controllers (13, 14) being connected to each other so as to synchronize the two commands with each other or **in that** it comprises a controller (14) for the inverter (6) that drives the inverter (6) and several controllers (11, 12) for the storage units (1, 2), respectively, that drive the storage units (1, 2), the controller (14) for the inverter (6) being connected to the respective controllers (11, 12) of the storage units (1, 2) so as to synchronize its driving with their respective driving operations.

15. An electrical facility comprising an AC electrical network (7) and an electrical energy storage system according to any one of the preceding claims that is connected to said AC electrical network (7) so as to be able to power said AC electrical network (7).

16. The electrical facility according to claim 15, **characterized in that** the electrical facility is an electricity production or distribution facility.

17. The electrical facility according to claim 15 or 16, **characterized in that** one or more solar panels and one or more fuel cells and one or more wind turbines are connected after voltage adaptation, in parallel with the energy storage units (1, 2), to said input of the inverter (6), preferably respectively by means of one or more monodirectional choppers.

18. An electric energy storage system circuit, comprising, successively connected in series, an electric energy storage unit (1, 2) that can be charged and discharged asymmetrically, a bidirectional chopper (3, 4) and an oversized inverter (6) relative to the bidirectional chopper (3, 4), a given input of the inverter (6) being also designed to receive an output from another chopper, **characterized in that** the bidirectional chopper (3, 4) is sized asymmetrically for the charge and discharge of the storage unit (1, 2).
